# EUROPEAN PATENT APPLICATION

(11) **EP 2 835 913 A1**
(43) Date of publication of application: **11.02.2015**
(21) Application number: 13179446.3
(22) Date of filing: 06.08.2013
(51) Int. Cl.: H04B 5/00, H02J 17/00, H04W 52/24

(54) **Wireless power transmission method for preventing frequency interference and system therefor**

(71) Applicant: Hyundai Motor Company, Seoul (KR); Kia Motors Corporation, Seoul (KR)
(72) Inventor: Kim, Jong-Gyu, Incheon-shi (KR); Shon, Kyong-Ho, Gunpo-shi (KR); Hur, Nam-Woong, Soowon-shi (KR); Kim, Sin-Gu, Soowon-shi (KR)
(74) Representative: Viering, Jentschura & Partner Patent- und Rechtsanwälte

(57) **Abstract**

This present invention relates to a wireless power transmission method for prevention frequency interference, and more particularly to prevent frequency interference and collision between a wireless power transmitter and other devices which use a frequency adjacent to frequency band of the power signal transmitting from the wireless power transmitter. The wireless power transmission method includes outputting a using signal upon use of an wireless device and controlling operation of the wireless power transmitter according to whether or not the using signal is transmitted.

## Description

### BACKGROUND

### Field of the Invention

The present invention relates to a wireless power transmission method for preventing frequency interference and system therefor.

### Description of the Related Art

A wireless power transmission system is generally used as a technology for transmitting power between devices spaced apart from each other by using an induced electromotive force mechanism. In the wireless power transmission system, a known technology is used to enable power to be transmitted between devices arranged separately by using a frequency with a specific range which is generally between 100 and 210 kHz. However, since the wireless power transmission system transmits power by using a wireless signal, in case where other devices using a frequency adjacent to the frequency band of a signal for transmitting power are disposed at a close distance, there is a possibility that a malfunction may occur with frequency interference.

Accordingly, in order to avoid the frequency interference and collision, a multichannel technology has been generally used in the wireless power transmission system. In a wireless power transmission field, however, a frequency band which is able to be used practically is extremely limited. This means there is a restriction of changing the frequency variously for transmitting power without a wire. Moreover, upon a change of the frequency, power transmission efficiency is consequently varied according to the change of the frequency, and the variation range is significantly large so that it is difficult to be applied practically.

In another method, a method of shielding electromagnetic waves is used, which reduces a physical area influenced by the electromagnetic waves for the purpose of preventing frequency interference between different devices. The above mentioned method, however, has a disadvantage in that an extra cost is required for additionally installing a shielding member in the electromagnetic wave shielding structure. Moreover, if a wireless power transmission structure needs to be design-changed, there is another disadvantage in that the shielding structure applied previously has to be redesigned by re-measuring a radiation pattern whenever a wireless power transmitter is design-changed. Accordingly, there are disadvantages in that the method using the electromagnetic wave shielding is complicated to be developed and takes a long time required for developing it.

### SUMMARY OF THE INVENTION

The present invention has been made in view of the above problems, and it is an object to provide a structure outputting a using signal upon the use of an wireless device and controlling the operation of a wireless power transmitter according to whether or not the using signal is transmitted, for preventing frequency interference and collisions between the wireless power transmitter and other devices which use an frequency adjacent to the frequency band of a power signal transmitting from the wireless power transmitter.

In accordance with an aspect of the present invention, a wireless power transmission method for preventing frequency interference in a wireless power system having a wireless power transmitter, an wireless device, and a controller, includes: starting operation of the wireless device and outputting a using signal; and controlling the operation of the wireless power transmitter to be stopped in the controller when the using signal which the wireless device outputs is received, wherein the wireless power transmitter generates and transmits a power signal for transmitting power by radio.

The starting of the operation of the wireless device and outputting a using signal may include generating the using signal and transmitting the using signal to the controller in the wireless device.

The starting of the operation of the wireless device and outputting a using signal may further include: generating and outputting the using signal in the wireless device continuously.

The starting of the operation of the wireless device and outputting a using signal may further include: generating and outputting the using signal in the wireless device temporarily.

The method may further include: generating a using complete signal upon the stopping of operation and transmitting to the controller temporarily in the wireless device; and controlling the wireless power transmitter to be restarted when the controller receives the using complete signal, wherein the starting of the operation of the wireless device and outputting a using signal further includes: generating and outputting the using signal in the wireless device temporarily.

The using signal and the using complete signal may have the same frequency waveform.

The using signal and the using complete signal may have different frequency waveforms, respectively.

The using signal may include the same signal which is used upon communication of the wireless device.

The starting of operation of the wireless device and outputting a using signal may include: a starting operation after initially transmitting the using signal and then waiting for a predetermined time in the wireless device.

The method may further include: stopping output of the using signal upon the stopping of operation in the wireless device; and controlling the wireless power transmitter to restart when the using signal is not received in the controller.

The controller may control transmission and shut-off of the power signal by shutting off the power or releasing shutting off the power of the wireless power transmitter.

The method may further include: generating a power signal and transmitting the power signal to the wireless device in the wireless power transmitter; and receiving the power signal and supplied with power in the wireless device, in order to provide power.

### BRIEF DESCRIPTION OF THE DRAWINGS

The objects, features and advantages of the present invention will be more apparent from the following detailed description in conjunction with the accompanying drawings, in which:
FIG. 1 is a block diagram illustrating a system which executes a wireless power transmission method for preventing frequency interference according to an exemplary embodiment of the present invention;
FIG. 2 is a flowchart illustrating a wireless power transmission method for preventing frequency interference according to a first embodiment of the present invention;
FIG. 3 is a flowchart illustrating a wireless power transmission method for preventing frequency interference according to a second embodiment of the present invention; and
FIG. 4 is a block diagram illustrating a system which applies a wireless power transmission method for preventing frequency interference according to an exemplary embodiment of the present invention.

### DETAILED DESCRIPTION OF EXEMPLARY EMBODIMENTS

Hereinafter, exemplary embodiments of the present invention are described with reference to the accompanying drawings in detail. Terms and words used in the specification and the claims shall not be interpreted as commonly-used dictionary meanings, but shall be interpreted as those being relevant to the technical scope of the invention based on the fact that the inventor may properly define the concept of the terms to explain the invention in the best way. Therefore, the embodiments and the configurations depicted in the drawings are for illustrative purposes only and do not represent all technical scopes of the embodiments, so it should be understood that various equivalents and modifications may exist at the time of filing this application.

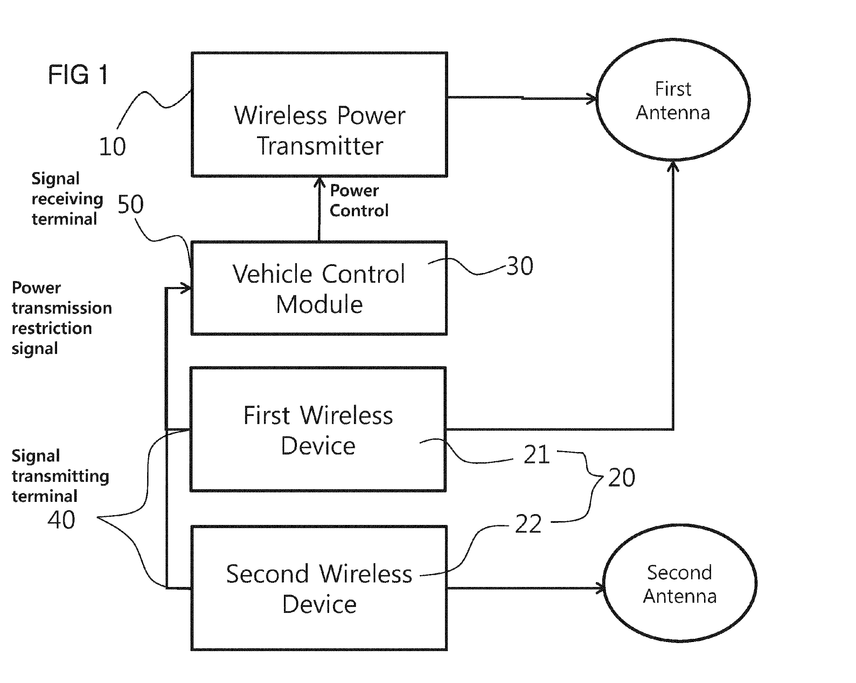

FIG. 1 is a block diagram illustrating a system which executes a wireless power transmission method for preventing frequency interference according to an exemplary embodiment of the present invention.

As shown in the figure, the system that performs a wireless power transmission method for preventing frequency interference according to the present invention includes a wireless power transmitter 10, one or more wireless devices 20, and a controller 30.

The wireless power transmitter 10 generates and transmits a power signal by using a wireless power transmission technology, and the wireless device 20 is arranged adjacently to the wireless power transmitter 10 and communicates with a frequency adjacent to the frequency which the wireless power transmitter 10 uses (or operates with receiving a power signal transmitted from the wireless power transmitter), and the controller 30 which communicates with the wireless power transmitter 10 and controls operation of the wireless power transmitter 10 according to a signal output from the wireless device 20.

A first wireless device 21 and a second wireless device 22 are shown in FIG. 1, but the present invention is not limited thereto and it is possible to provide more wireless devices that may be constituted by other electronic devices using an adjacent frequency which may cause frequency interference with the frequency of the power signal transmitted from the wireless power transmitter 10.

As shown in FIG. 1, the first wireless device 21 and the second wireless device 22 have the same mechanism through which power is supplied and there is merely a difference in transmission and reception antenna, i.e. difference between the first antenna and the second antenna. Therefore, one or more wireless devices are referred to as an "wireless device 20."

The word "adjacent" is used as the same meaning in this specification of the present invention as being generally used, and more specifically is used as a meaning that covers the frequency range of the wireless power transmitter 10 or is used as meaning a range in which the frequency interference can be caused with the transmission frequency of the wireless power transmitter 10. In addition, the word "a wireless device" may be a wireless device to use a same frequency with the power signal from the wireless power transmitter or an adjacent frequency with the power signal from the wireless power transmitter.

The term "wireless power transmission technology" refers to a known technology that transmits power wirelessly by using a power signal of a specific frequency band, for example, a frequency which has a range between 100 kHz and 210 kHz. In wireless power transmission technology, a wireless power transmitter generates the power signal to be included in the specific frequency band and transmits the power signal through a transmitting terminal, and one or more devices to be supplied with power from the wireless power transmitter receive the power signal through a receiving terminal thereof, and then are supplied with power converted from the power signal using induced electromotive force of the power signal.

As shown in the figure, the system adopting the wireless power transmission method for preventing frequency interference according to the present invention includes a wireless power transmitter 10 that transmits the power. The wireless power transmitter 10 may include the configuration of the known wireless power transmitter 10, and more particularly a controller for controlling an operation of the system, a power supplier for provided a power, a power signal converter for converting the supplied power to a power signal, an antenna for transmitting the power signal to an wireless device, and an oscillation converter. Since the configuration of the wireless power transmitter 10 is known, a detailed description thereof will be omitted.

The wireless power transmitter 10 according to the present invention stops transmission of the power signal to prevent frequency interference and collision at the time of using the wireless device 20 to be described below. The operation control of the wireless power transmitter 10 is performed by the controller 30 to be described below. Thus, the operation of the wireless power transmitter 10 according to the present invention is contingent on control of the controller 30, and the controller 30 controls the operation of the wireless power transmitter 10 by shutting off or releasing the shut off the power of the wireless power transmitter 10 for example. The controller 30 can be connected to the wireless power transmitter 10 by a wire or a radio.

The wireless device 20 commonly indicates all known devices which use a frequency adjacent to a frequency of the power signal transmitted by the wireless power transmitter 10, or communicates wirelessly through the wireless power transmitter. In other words, the wireless device 20 is a device which has a transmission antenna, transmits a wireless signal for performing an original function of the wireless device, and uses a frequency band adjacent to a specific range thereof which is used by the wireless power transmitter 10.

Upon transmission and reception of a signal, the wireless device 20 may interfere and collide with the power signal transmitted from the wireless power transmitter 10, so when using the wireless device 20 of the present invention, an operation of the wireless power transmitter 10 has to be stopped. To perform the above mentioned process, the wireless device 20 generates and transmits a using signal for restricting the signal transmission of the wireless power transmission 10.

The using signal is generated by the wireless device 20 to transmit, and may be a specific signal to be additionally generated to output upon operation of the wireless device according to the preferred embodiment of the present invention, and is not limited to the specific signal, and may be a communication signal for communicating in the wireless device 20.

The using signal generated by the wireless device 20 is transmitted through a signal transmitting terminal 40 mounted on the wireless device 20, and a signal receiving terminal 50 of a controller 30 described below receives the using signal to transmit to a controller 30. In this case, the signal transmitting terminal 40 and the signal receiving terminal 50 may be an antenna (a second antenna of FIG. 1) for transmitting a wireless signal of the wireless device 20, and may be further configured to separate from the antenna for transmitting the wireless signal. It is well known so a detailed description thereof will be omitted.

In the preferred embodiment of the present invention, the signal transmitting terminal 40 and the signal receiving terminal 50 may transmit and receive the signal to and from each other through the wireless communication and in another exemplary embodiment of the present invention, the signal transmitting terminal 40 is connected to the signal receiving terminal 50 of the controller by wire.

The wireless device 20 and the wireless power transmitter 10 of the present invention do not operate each other at the same time, and when at least one of the wireless devices 20 tries to start operating while the wireless power transmitter 10 operates, the signal transmitting terminal 40 of the wireless device 20 outputs the using signal and the controller 30 received the using signal controls to stop the operation of the wireless power transmitter 10 temporarily in order to prevent frequency collision.

In this case, it is preferable that the wireless device 20 consistently transmits the using signal during operating and the controller 30 controls the operation of the wireless power transmitter 10 to be stopped constantly while receiving the using signal. Thus, the wireless power transmitter 10 is controlled so as not to be operated while the wireless device is operating.

In another exemplary embodiment of the present invention, however, the wireless device 20 transmits the using signal in the initial operation and the controller stops the operation of the wireless power transmitter 10 upon the initial reception of the using signal. Also, the wireless device 20 generates and transmits a using complete signal upon the stopping of operation, and the controller 30 operates the wireless power transmitter 10 again. Thus the wireless power transmitter 10 is controlled so as not to be operated while the wireless device is operating. In this embodiment, it is preferable that the using signal and the using complete signal have different frequencies, but it is well known to the skilled person that these signals may have the same frequency.

Meanwhile, in the preferred embodiment of the present invention, it is advisable that the wireless device 20 starts to operate after a predetermined set time after transmitting the using signal to prevent frequency interference and collision in advance.

The controller 30 receives the using signal which is output from the wireless device 20 and is coupled to the wireless power transmitter 10 for controlling the operation of the wireless power transmitter 10. The operation of the wireless power transmitter 10 is controlled by shutting off the power or releasing the shut off of the power which supplied thereto, but this invention is not limited thereto.

The controller 30 is a kind of an electric control unit (ECU), for example, such as a vehicle control module which controls all electric devices in a vehicle and is well known, so the detailed description thereof is omitted.

The controller 30 further includes a signal receiving terminal 50 which receives the using signal transmitted from the wireless device 20 for being coupled to the wireless device 20. An antenna configured for transmitting the power signal is used as the signal receiving terminal. The controller 30 controls the operation of the wireless power transmitter 10 based on the using signal received from the signal receiving terminal 50. Preferably the controller 30 controls the operation of the wireless power transmitter 10 to be stopped when the using signal from the signal receiving terminal 50 is received.

More preferably, the controller 30 is connected to the wireless power transmitter 10 via communication network within a vehicle such as CAN, LIN, Flex ray, etc., but the present invention is not limited thereto and includes known wireless or wire communication technology.

In case of using the communication network within a vehicle such as CAN, LIN and Flex ray, there are benefits that there is no need to install any another communication channel, or to use extra communication channel in a vehicle control module.

In another exemplary embodiment of the present invention, the controller 30 may be communicated with the wireless power transmitter 10 by a wireless commiunication. The controller 30 transmits a using restriction signal continuously during a predetermined time in case of control for stopping the operation of the wireless power transmitter 10, and the wireless power transmitter 10 can be stopped its operation while the wireless power transmitter 10 receives the using restriction signal.

In another exemplary embodiment of the present invention, the controller 30 may be communicated with the wireless power transmitter 10 by a wireless commiunication. The controller 30 transmits a using restriction signal in case of control for stopping the operation of the wireless power transmitter 10, and then transmits a using restriction ending signal after a standing by for predetermined time so that the controller 30 can stop the operation of the wireless power transmitter 10 during the predetermined time. In this case, the wireless power transmitter 10 can be stopped its operation upon the receipt of the using restriction signal, and then the wireless power transmitter 10 can be operated upon the receipt of the using restriction ending signal. It is preferable that the using restriction signal and the using resriction ending signal have the different frequencies each other, however, may have the same frequency each other.

Meanwhile, in the preferred embodiment of the present invention, the controller controls for stopping the operation of the wireless power transmitter during a predetermined time at the time of starting of vehicle. The chance of interference between the wireless device and the wireless power transmitter may be occurred highly at the time of starting of vehicle because any electric power can be automatically provided to the wireless power transmitter at the time of starting of vehicle. Thus, in the preferred embodiment of the present invention, the controller controls for stopping the operation of the wireless power transmitter during a predetermined time at the time of starting of vehicle in order to prevent the chance of interference between the wireless device and the wireless power transmitter.

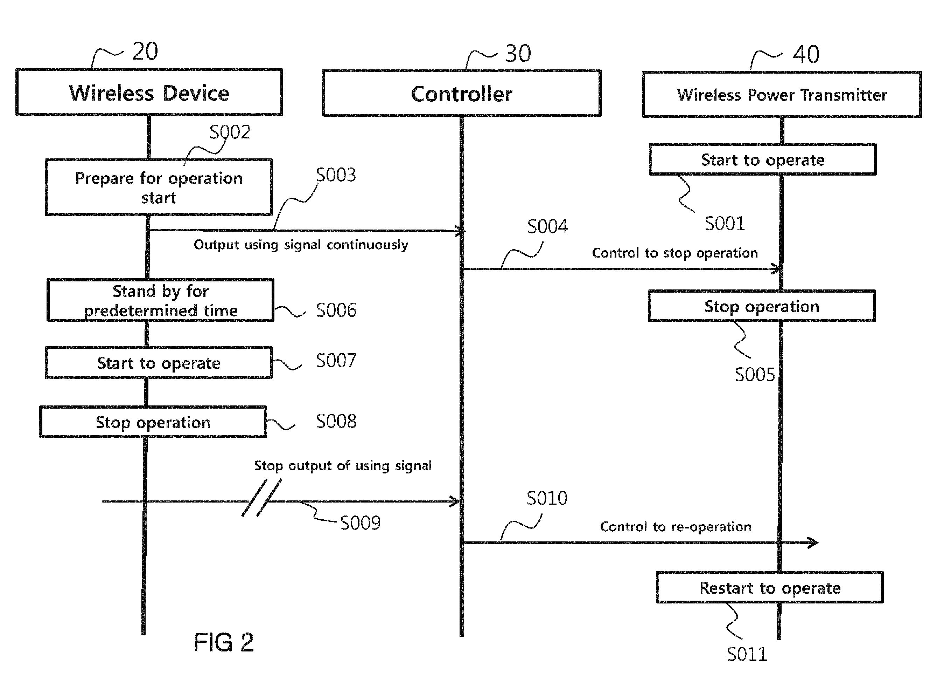

FIG. 2 is a flowchart illustrating a wireless power transmission method for preventing frequency interference according to a first embodiment of the present invention.

A wireless device 20 shown in FIG. 2 is illustrated as one block for convenience of the description, but may correspond to one or more devices.

When a wireless power transmitter 10 starts to operate (S001), the wireless power transmitter 10 generates a power signal by receiving power from a power supply unit and transmits the power signal through a signal transmitting terminal. The power signal transmitted from the wireless power transmitter 10 is provided to each device which is supplied with power through the wireless power transmitter 10 and uses the power. In one embodiment of the present invention, the wireless device 20 receives the power signal from the wireless power transmitter 10, and then is supplied with the power by an induced electromotive force, and uses the power to perform operation or stores the power in a power storing unit configured therein autonomously, but the present invention is not limited thereto.

When the wireless device 20 is ready to start to operate (S002), for example, when a user handles to start the operation, or another device or a controller controls to start operation, the wireless device 20 generates the using signal and prints out the using signal through the signal transmitting terminal 40 before the operation (S003). In a preferred embodiment of the present invention, the using signal is generated and output consistently during operation of the wireless device 20.

The controller 30 stops operation of the wireless power transmitter 10 when the using signal which is transmitted by the wireless device 20 from the signal transmitting terminal 50 is received (S005). The wireless power transmitter 10 is controlled to stop the operation thereof by shutting off the power supplied thereto, or is controlled to stop the operation autonomously. The step of stopping the operation of the wireless power transmitter 10 is not limited thereto and is well known, so a detailed description is omitted. In this step, the controller 10 constantly receives the using signal transmitted from the wireless device 20 continuously, and controls to stop continuously the operation of the wireless power transmitter 10 while receiving the using signal.

Meanwhile, after transmitting the using signal in the step S003, the wireless device 20 stands by for a predetermined stand-by time (S006). The stand-by-time is to compensate a time while the using signal transmitted from the wireless device 20 is received by the vehicle control module 30, and the operation of the wireless power transmitter 10 is stopped by the vehicle control module 30 to stop transmission of the power signal, in order to prevent interference and collision between the power signal transmitted from the wireless power transmitter 10 and the using signal transmitted from the wireless device 20. Thus, the wireless device 20 transmits a signal after the predetermined stand-by time of the wireless power transmitter 10.

The wireless device 20 start to operate after standing by for the predetermined stand-by time of the step S006 to transmit the using signal (S007). In the preferred embodiment of the present invention, the using signal transmitting in the step S007 is the same signal as the using signal transmitting in the steps S002 and S003 preferably, but it is well-known that the using signals may be also different. In other words, in another embodiment of the present invention, the signal which is output in steps S002 and S003 may be only signal to control operation of the wireless power transmitter 10, and the signal which is output in step S007 may be a signal which is used for communication of the wireless device 20.

When the use of the wireless device 20 is completed and the operation thereof is stopped (S008), the using signal which is generated and output from the wireless device 20 is also stopped to be output (S009).

The controller 30 releases an operation stop control of the wireless power transmitter 10 corresponding to the disappearance of the signal which is being consistently received, and controls to the output of the power signal by re-operating the wireless power transmitter 10 (S010).

Thus, the wireless power transmitter 10 starts to operate again according to supplied power which is shut off by the controller 30 (S011).

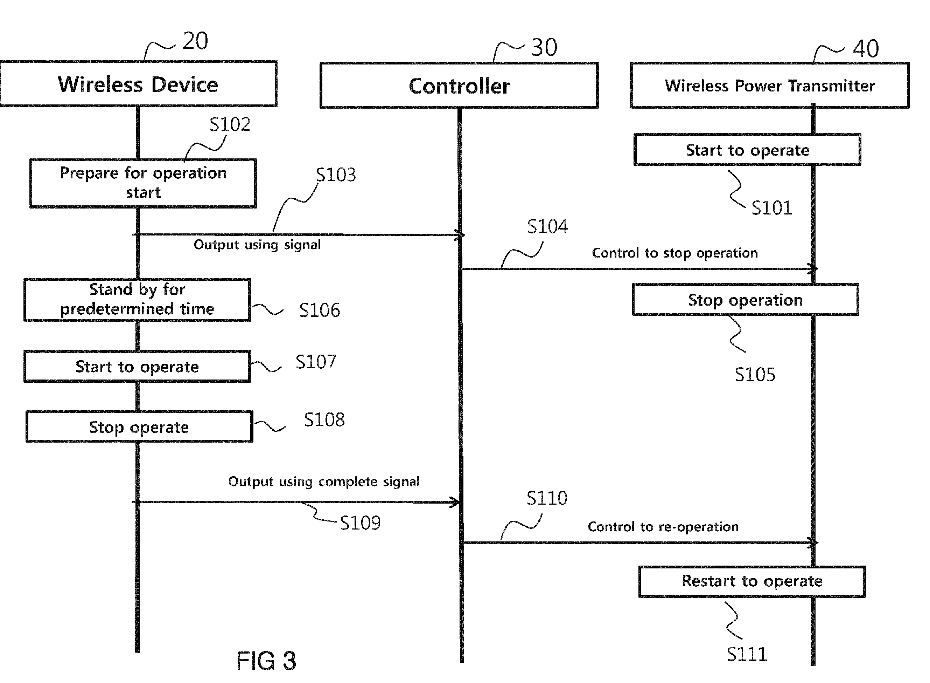

FIG. 3 is a flowchart illustrating a wireless power transmission method for preventing frequency interference according to a second embodiment of the present invention.

The second embodiment of the present invention is configured the same as the first embodiment, but the controller recognizes an operation start step and an operation complete step of the wireless device 20 by temporarily outputting the using signal from the wireless device 20 in an operation start ready step and temporarily outputting again in an operation stop step. Thus, each step of the second embodiment corresponds to the step of the first embodiment except the steps described below.

While in step S002 of the first embodiment, the wireless device 20 generates and outputs consistently a using signal before starting to operate and in step S102 of the second embodiment of the present invention, the wireless device 20 outputs temporarily the using signal before starting operation. Thus, the wireless device 20 only outputs the using signal in the operation start ready step so as to perform differently from the first embodiment.

In step S108 of the second embodiment of the present invention, the wireless device 20 temporarily outputs the using signal upon stopping the operation of the wireless device 20 once more.

The wireless device 20 only temporarily outputs the using signal in the operation stop step, differently from the first embodiment.

Thus, the controller 30 recognizes the operation start step and the operation stop step of the wireless device 20 by receiving the using signal which is temporarily output from the wireless device 20.

In the second embodiment of the present invention, the using signal is the same signal which is used in communication with the wireless device 20, like the first embodiment. Also, the using signal is a specific signal to recognize the operation start step and the operation stop step of the wireless device 20 in order to control the operation of the wireless power transmitter 10. In this case, the using signal outputting in the operation start step has the same or different frequency waveform as the using signal outputting in the operation stop step. When having a different frequency, the wireless device 20 may output the using signal in the operation start and output the using complete signal in the operation stop.

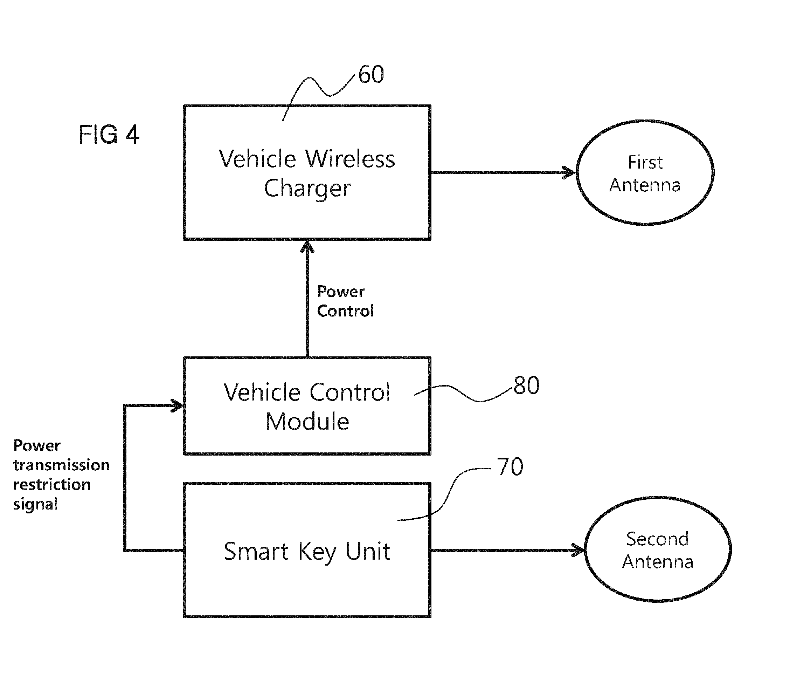

FIG. 4 is a block diagram illustrating a system which applies a wireless power transmission method for preventing frequency interference according to an exemplary embodiment of the present invention.

As shown in the figure, the embodiment of FIG. 4 includes a vehicle wireless charger 60, a smart key unit (SMK Unit) 70, and a vehicle control module 80 which corresponds to the wireless power transmitter 10, the wireless device 20, and the controller 30, respectively.

The vehicle wireless charger 60 transmits a power signal through a first antenna while the vehicle wireless charger 60 is operating, and in this case, the power signal interrupts searching for an LF signal of the smart key unit 70 using a frequency adjacent to a frequency band used by the power signal, for example, 125 kHz. Therefore, the smart key unit 70 requests to temporarily stop operation of the vehicle wireless charger 60 by transmitting a power transmission restriction signal to the vehicle control module 80 to easily search for the LF signal, and the vehicle control module 80 controls the operation of the vehicle wireless charger 50 to be stopped by shutting off the power supplied to the vehicle wireless charger 60. Accordingly, the smart key unit 70 searches for the LF signal through a second antenna without signal interference after the vehicle wireless charger 60 stops operation.

When the searching operation for the LF signal in the smart key unit 70 is terminated, the smart key unit 70 stops transmission of the power transmission restriction signal which is transmitting to the vehicle control module 80, and the vehicle control module 80 controls the vehicle wireless charger 60 to be re-operated by supplying the power to the vehicle wireless charger 60 again.

According to exemplary embodiments of the present invention configured as above, a drawback of requiring much time in designing of the system, including the measuring of a radiation pattern, selecting and applying a shield material, and designing a physical shape, etc., in the case of a technology for preventing frequency collision by electromagnetic shielding of the conventional art, can be solved by outputting a using signal upon use of an wireless device and by controlling the operation of the wireless power transmitter according to whether or not to transmit the using signal, to prevent interference of a power signal transmitted by a wireless power transmitter, , and also time for designing can be reduced solely by modifying software in an wireless device and a BCM.

Moreover, in a wireless power transmitter of the conventional art, the cost increase due to the use of a shielding material at the stage of manufacturing a wireless power transmitter in case of trying to avoid interference and collision by using electromagnetic shielding, whereas a wireless power transmitter of the present invention is configured not to need further additional shielding materials at the stage of manufacturing a wireless power transmitter, and thus extra cost is not incurred at the early stage of design.

Furthermore, according to the present invention, a communication unit for preventing frequency collision of the wireless charger is not embedded in the wireless charger, thereby reducing manufacturing cost of a wireless charger for preventing frequency collision.

While the invention has been shown and described with reference to certain preferred embodiments thereof, it will be understood by those skilled in the art that various changes in form and details may be made therein without departing from the spirit and scope of the invention as defined by the appended claims.

## Claims

1. A wireless power transmission method for preventing frequency interference in a wireless power system having a wireless power transmitter, an wireless device, and a controller, comprising:
starting operation of the wireless device and outputting a using signal; and
controlling the operation of the wireless power transmitter to be stopped in the controller when the using signal which the wireless device outputs is received,
wherein the wireless power transmitter generates and transmits a power signal for transmitting power by radio.

2. The method of claim 1, wherein the starting of the operation of the wireless device and outputting a using signal comprises
- generating the using signal in the wireless device and transmitting the using signal to the controller, or
- generating and outputting the using signal in the wireless device continuously, or
- starting operation after initially transmitting the using signal and then waiting for a predetermined time in the wireless device.

3. The method of claim 1, wherein the starting of the operation of the wireless device and outputting a using signal further comprises generating and outputting the using signal in the wireless device temporarily.

4. The method of claim 3, further comprising:
generating a using complete signal upon the stopping of operation and transmitting the using complete signal to the controller temporarily in the wireless device; and
controlling the wireless power transmitter to be restarted when the using complete signal is received in the controller.

5. The method of claim 4, wherein
- the using signal and the using complete signal have the same frequency waveform, or
- the using signal and the using complete signal have different frequency waveforms, respectively.

6. The method of claim 1, wherein controlling the operation of the wireless power transmitter to be stopped in the controller when the using signal which the wireless device outputs is received comprises:
- controlling for stopping the operation of the wireless power transmitter by transmitting a using restriction signal continuously during a predetermined time if the controller detects the using signal, or
- controlling for stopping the operation of the wireless power transmitter during a predetermined time by transmitting a using restriction signal and then transmitting a using restriction ending signal after a standing by for predetermined time if the controller detects the using signal.

7. The method of claim 1, wherein the using signal is the same signal which is used upon communication of the wireless device.

8. The method of claim 1, further comprising:
stopping output of the using signal upon the stopping of operation in the wireless device; and
controlling the wireless power transmitter to be restarted when the using signal is not received in the controller.

9. The method of claim 1, wherein the controller controls the transmission and shutoff of the power signal by shutting off the power or releasing the shut off the power of the wireless power transmitter.

10. The method of claim 1, further comprising:
generating a power signal and transmitting the power signal to the wireless device in the wireless power transmitter; and
receiving the power signal and supplied with power in the wireless device.

11. The method of claim 1, wherein the wireless device is a smart key unit to communicate with the controller by radio.

12. The method of claim 1, wherein the contoller is vehicle control module to communicate with the wireless device, and wherein the wireless power transmitter is connected to the controller.

13. The method of claim 12, wherein the wireless power transmitter is connected to the controller by a wire or via a CAN communication network within a vehicle.

14. The method of claim 1, wherein the controller controls for stopping the operation of the wireless power transmitter during a predetermined time at the time of starting of vehicle.

15. A wireless power transmission system for preventing frequency interference comprises:
a wireless power transmitter to generate and transmit a power signal for transmitting power by radio;
a wireless device to output a using signal, and wherein the using signal uses a same frequency with the power signal or an adjacent frequency with the power signal;
a controller to stop the operation of the wireless power transmitter when the using signal is received from the wireless device.
